(19) Europäisches Patentamt / European Patent Office / Office européen des brevets

(11) **EP 4 744 495 A1**

(12) **EUROPEAN PATENT APPLICATION**

(43) Date of publication:
20.05.2026 Bulletin 2026/21

(21) Application number: 24306929.1

(22) Date of filing: 18.11.2024

(51) International Patent Classification (IPC):
*A23C 11/10* (2025.01)     *A23L 2/38* (2021.01)
*A23L 11/50* (2021.01)     *A23L 25/00* (2016.01)

(52) Cooperative Patent Classification (CPC):
**A23C 11/106; A23L 2/382; A23L 11/50; A23L 25/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ROQUETTE FRERES**
**62136 Lestrem (FR)**

(72) Inventors:
• **Morcet, Adeline**
  **62136 LESTREM (FR)**
• **Muller, Elsa**
  **62136 LESTREM (FR)**

(74) Representative: **Plasseraud IP**
**104 Rue de Richelieu**
**CS92104**
**75080 Paris Cedex 02 (FR)**

(54) **NON-DAIRY FERMENTED FOOD PRODUCT COMPRISING A FAVA PROTEIN ISOLATE**

(57) The present invention concerns a non-dairy fermented food product comprising fava bean protein with improved aspect and texture.

EP 4 744 495 A1

**Description**

**TECHNICAL FIELD OF THE INVENTION**

The present disclosure generally relates to non-dairy fermented food products and methods for making non-dairy fermented food products.

**BACKGROUND OF THE INVENTION**

Fermented food products play an important role in the diets of various cultures around the world. Dairy-based fermented food products, such as yogurt and kefir, are popular foods that are available in many different forms. Dairy-based fermented food products can provide dietary protein and beneficial probiotic bacteria. However, many consumers prefer to avoid eating animal-based foods, including those based on milk ingredients. Plant proteins can be good substitutes to animal proteins. For example, non-dairy alternatives to yogurt are available, including yogurts based on soy, almond, and/or coconut milks. However, the available non-dairy alternatives to yogurt can suffer from poor texture, poor flavor, and/or low protein content. Thus, there is a need for improved non-dairy alternatives to yogurt.

Plant proteins can be from different sources such as oilseeds, cereals or leguminous plants. These can have very different properties depending on their nature. Fava beans, also known as faba beans, horse beans or field beans, are annual leguminous plants of the Vicia faba species. These are leguminous plants of the Fabaceae family, Faboideae subfamily, Fabeae tribe. Proteins extracts made from fava beans have been developed recently, including NUTRALYS® FAVA protein commercialized by the applicant. These fava bean protein extracts can be used in various food applications such as beverages, plant creams, baking applications, meat substitutes or sauces and also non-dairy fermented food products.

A yogurt is made by seeding milk with lactic acid ferments. Generally, to be called a yogurt according to the regulation, it must necessarily and only contain two specific ferments, Lactobacillus delbrueckii subsp. bulgaricus and Streptococcus thermophilus, which give its taste specificity and its texture, and also provide certain nutritional and health benefits. Other fermented milks (with a yogurt texture) have been created in recent years. They may or may not contain these two bacteria, and in addition strains such as Lactobacillus acidophilus, Lactobacillus casei, Bifidobacterium bifidum, B. longum, B. infantis and B. breve.

Yogurts are thus an excellent source of probiotics, i.e. of live microorganisms, which, when ingested in sufficient amount, exert positive health effects, beyond the conventional nutritional effects.

The process of fermentation in yogurts is a complex process that involves the use of different ingredients (proteins, sugars, optionally lipids). These ingredients will interact with each other and some of the ingredients, especially sugars, are transformed by the ferments. Acidification of the milk happens during fermentation, which is directly linked with the transformation of the sugars by the strain in acidic compounds. Proteins can refold during acidification due to changes in the environment that affect their structure, so that the properties of the protein such as gelling properties, water holding capacity, viscosity and/or solubility are modified during fermentation. This leads to a change of the texture of the milk during fermentation and participates to the final texture of the yogurt.

According to the invention, whether it is set, stirred or liquid, the name yogurt is retained whatever the aspect since, beyond the regulatory definitions, it is mainly its manufacturing process and the protein quantities used that will condition its final viscosity and aspect. However other ingredients, especially lipids or additional ingredients may also have an impact on the final texture.

To obtain a set yogurt, the fermentation happens directly in the cup. On the other hand, in the case of a stirred yogurt, the milk is seeded and fermented in a tank and then stirred, before being poured into its cup. Finally, liquid yogurt, also called drinking yogurt, has the same steps as the stirred yogurt but uses a milk with a protein content lower than in stirred yogurts, generally around 2%. It is stirred and then blended until the appropriate texture is obtained to be poured into bottles.

The replacement of one protein by another is thus not an easy task as it is a key ingredient, especially in the case of set and stirred yogurts. Without being bound to any theory, one explanation of the different textures obtained with different proteins may be due to the different properties at acidic pH of the proteins such as gelling properties, water holding capacity, viscosity and/or solubility at acidic pH. As explained, these properties are linked to the refolding of the protein and interactions between the different protein chains that drive the ability to form a protein matrix in the form of a gel. Indeed, besides their nutritional importance, proteins have a chemical structure that depends on the source used. This chemical structure has an impact on the way the protein refolds during acidification, and this directly impacts the gel texture and viscosity of the non-fermented food. Every change of protein used can unexpectedly affect the non-fermented food product in consequence. The use of fava bean proteins in non-dairy fermented food products such as non-dairy yogurts is already known and non-dairy fermented food products comprising fava bean proteins are described in the following documents.

WO 2022/063901 A1 describes plant-based fermented dairy drinks analogues. The process includes homogenizing of plant-based milk, thermal treating, fermenting after inoculation of the strain and a final thermal treatment step and is characterized by a step of addition of pectin between the homogenizing step and the final treatment step. One fava bean liquid yogurt comprising 2.1% of protein is prepared in example 6. The final pH of the drinking yogurt is 4.6.

WO 2023/073238 A1 describes a fava protein composition wherein the weight ratio of fava albumins to fava globulins is between 1:4 and 1:20. Yogurt of Example 7 comprises 6% of protein isolate and 2.5% of coconut oil and the step of fermentation is stopped when the pH reaches 4.60. Another recipe, available on the website https://www.cosunprotein.com/tendra/substitutes/plant-based-dairy-alternatives, describes a yogurt comprising 6% of protein isolate and further comprising citrus fiber. The step of fermentation is stopped when the pH reaches 4.5.

WO2022/117918 describes fermented or acidified plant-based foods comprising a plant protein made by a specific process using membrane filtration. Yogurt of Example 3 is obtained by fermenting a protein-rich composition, the fermentation being stopped when the pH reaches 5 and yogurt of Example 5 is obtained by fermenting a protein-rich composition, the fermentation being stopped when the pH reaches 4.6.

US2022/0304331 A1 also describes yogurt comprising 4% of fava bean protein isolate and is fermented until the pH reaches 4.6.

However, on the contrary to non-dairy fermented food products using other leguminous plant proteins such as pea protein, the use of fava bean protein can cause different issues in the texture of the yogurt obtained. First, in the prior art, the fermentation of fava bean protein yogurt is conducted in such a way that the fermentation is stopped at a pH generally ranging from 4.5 to 5. The inventors have noticed that at this range of pH, yogurts based on fava bean protein have some texture issues, especially grittiness mouthfeel and grainy aspect. Gritty texture is a sensory attribute that refers to the presence of small, hard particles in a food product. These particles can create a sandy or gritty texture when consumed, which can be perceived as unpleasant by consumers. Grittiness is perceived through the sense of touch in the mouth. When consumers taste a food product, they may feel small, hard particles between the tongue and the soft palate that create a rough or sandy texture. This sensation can be off-putting and affect the overall enjoyment of the food product. The same applies to the visual observation of grains in the cup or on the spoon while eating the yogurt. Moreover, the increase of protein content in the non-fermented food product can also increase this sensation of grittiness and grainy aspect.

To minimize grittiness, formulating the product with ingredients that have a smoother texture can also help. In non-dairy fermented food products, one solution to reduce the perceived grittiness is to add ingredients with smooth attributes, i.e. texturizers. However, the use of these texturizers is not always desired because of their cost. Their addition also makes the recipe more complex, with another component to be added on the ingredient list written on the label of the product. Moreover, these texturizers are considered as additives according to many food regulations and customers of some markets are more and more reluctant to eat food products comprising such additives.

Texturizers are also able to provide a firmer texture to the yogurts. A firm texture in food refers to a quality where the food feels solid and resists pressure when bitten or chewed. This texture is often associated with foods that maintain their shape and structure, providing a satisfying sensation in mouth without being too hard or too soft, i.e. the firmness expected from a dairy yogurt (set, stirred, Greek, skyr etc...). In yogurts, the texture will be linked to its dry matter content and especially its content of protein. In the case of plant-based yogurts, the firmness can sometimes be insufficient as compared to dairy yogurts. The addition of texturizer may solve the issue but its use can sometimes be undesired as explained above. Another solution is to increase the content of protein to provide additional firmness, but this may raise the gritty mouthfeel described above and can increase the cost of the formulation.

In the case of yogurts comprising fat, using an oil having a melting temperature higher than 10°C can increase the firmness. However, the firmness can obviously not be improved for fat-free yogurts. Moreover, in the case of yogurts comprising fats, the use of such oils may be not desired for nutritional purposes. Indeed, the composition of these oils is high in saturated fatty acids and low in unsaturated fatty acids, and oils with high content of saturated fatty acids have lower nutritional benefits than oils having high content of unsaturated fats. Moreover, these fats are generally coprah oil or coconut oil and there are questions regarding the sustainability of the use of these oils, especially when the yogurt product is to be manufactured in regions where coconut does not grow.

It appears from the above that there is a need to improve fava bean protein-based yogurts, particularly with regards to grittiness in the mouthfeel. There is also a need to be able to provide such yogurts with improved or maintained firmness, while containing less protein and/or without including additional texturizers and/or allowing for a reduction in saturated fat content.

This is precisely an object of the invention that will now be described below.

## SUMMARY OF THE INVENTION

One first object of the invention concerns a non-dairy fermented food product comprising at least one fava bean protein and having a total protein content of from 2.5 to 12.0 grams per 100 grams of the non-dairy fermented food product, wherein the food product has a pH at 5°C from 3.80 to 4.40.

Another object of the invention is a method of making the non-dairy fermented food product of the invention, the method comprising:

- a hydration step of the fava bean protein extract comprising a shear mixing of the fava bean protein into a liquid, preferably at a temperature ranging from 40 to 75°C to form a liquid mixture, preferably during 10 to 60 minutes, more preferably during 15 to 30 minutes;
- optionally mixing a sugar and/or an oil with the liquid mixture;
- heating the liquid mixture to a temperature of from about 65° C to about 120° C for sufficient time to produce a thermally treated liquid;
- homogenizing the liquid mixture and/or the thermally treated liquid mixture by high pressure homogenization, preferably at a pressure ranging from 50 to 500 bar, for example from 100 to 300 bar;
- inoculating the thermally treated liquid mixture with a lactic acid bacterial culture;
- fermenting the thermally treated liquid mixture until its pH ranges from 3.80 to 4.40 to form the fermented food product.

It appears from above that, among the different fava bean yogurts described in the prior art, these have a pH feature going from 4.5 to 5, generally of 4.6. As demonstrated in the Examples section, the fava bean yogurt with the defined pH of the invention has a lower grittiness than the fava bean yogurt having higher pH. It was also observed that the firmness of the yogurt is even higher at that range of pH. Furthermore, in the case of other leguminous plant proteins such as pea, it was observed that no improvement in the texture is obtained in that range of pH, neither in the grittiness mouthfeel nor in the firmness. Thanks to the process of the invention, it is now possible to obtain non-dairy fermented food product comprising fava bean proteins with improved texture, especially low gritty mouthfeel, even with high amount of fava bean protein in the fermented food product. It is also possible to obtain firmer yogurts, and this even in the case the protein content of the fermented food product remains low, in the case the fermented food product does not use texturizer and/or in the case the fermented food product does not use a solid fat such as coconut or coprah oil.

The invention and variants thereof are now going to be described in details below.

## BRIEF DESCRIPTION OF THE DRAWINGS

Figure 1 shows samples of a fava bean protein fermented food products in a spoon having a pH of around 5.3 (Figure 1a), around 4.8 (Figure 1b), around 4.3 (Figure 1c), which correspond to the fava bean protein yogurts manufactured in Example 2.

Figure 2 shows samples of a pea protein fermented food products in a spoon having a pH of around 5.2 (Figure 2a), around 4.7 (Figure 2b), around 4.3 (Figure 2c), which correspond to the pea protein yogurts manufactured in Example 2.

Figure 3 shows the samples of the fava bean protein fermented food products having a pH of around 5.3 (Figure 3a), around 4.8 (Figure 3b), around 4.3 (Figure 3c) observed by light microscopy with the same x10 magnification, which correspond to the fava bean protein yogurts manufactured in Example 2.

Figure 4 (4a and 4b) shows the samples of the fava bean protein fermented food products with a recipe of the prior art using two different fava bean protein extracts, which correspond to the fava bean protein yogurts manufactured in Example 3.

Figure 5 shows the samples of fava bean protein fermented food products having a pH of 4.9 (Figure 5a), 4.6 (Figure 5b) or 4.3 (Figure 5c) observed by light microscopy with the same x20 magnification, which correspond to the fava bean protein yogurts comprising 4% of protein manufactured in Example 4.

Figure 6 shows samples of the fava bean protein fermented food products on a spoon having a pH of 4.9 (Figure 6a), 4.6 (Figure 6b) or 4.3 (Figure 6c), which correspond to the fava bean protein yogurts comprising 4% of protein manufactured in Example 4.

Figure 7 shows samples of the fava bean protein fermented food products on a spoon having a pH of 4.7 (Figure 7a) and 4.3 (Figure 7b), which correspond to the fava bean protein yogurts comprising 6% of protein manufactured in Example 4.

Figure 8 shows samples of the fava bean protein fermented food products having a pH of 4.7 (Figure 8a) and 4.3 (Figure 8b) observed by light microscopy with the same x20 magnification, which correspond to the fava bean protein yogurts comprising 6% of protein manufactured in Example 4.

Figure 9 shows samples of the fava bean protein fermented food products having a pH of 4.6 (Figure 9a) and 4.2 (Figure 9b) observed by light microscopy with the same x20 magnification, which correspond to the fava bean protein yogurts comprising 2% of protein manufactured in Example 4.

**DETAILED DESCRIPTION OF THE INVENTION**

The object of the invention concerns a non-dairy fermented food product. Non-dairy fermented food product of the invention can be a yogurt. The term yogurt according to the present invention includes yogurt-like products, which are non-dairy fermented food products that have similar taste and texture to the regular known yogurts but do not meet the various criteria of the regulatory definition. As explained above, yogurt can be a set yogurt, a stirred yogurt or a liquid yogurt. Yogurts can be flavored or left plain. There are many kinds of different stirred yogurts and it can be a Bulgarian yogurt, Greek yogurt or skyr yogurt. Bulgarian yogurt is a type of yogurt that is traditionally made using *Lactobacillus bulgaricus.* It is known for its thick and creamy texture, tangy flavor, and high probiotic content. Bulgarian yogurt is generally strained to remove excess liquid, resulting in a thicker consistency than regular yogurt. Greek yogurt is a type of yogurt that is traditionally strained to remove excess liquid, resulting in a thicker and creamier consistency than regular yogurt. The straining process used in making Greek yogurt removes much of the liquid, resulting in a higher protein and lipid contents than regular yogurt. Additional cream can also be added to Greek yogurts for more creaminess. Skyr yogurt is a traditional Icelandic dairy product that is similar to yogurt but has a thicker consistency and a milder taste. Traditional skyr yogurt is made from skimmed milk that is heated and then inoculated with live cultures of bacteria, similar to the process used to make regular yogurt. However, the cultures used to make skyr yogurt are different from those used to make yogurt, giving it a unique flavor and texture. Skyr yogurt is generally strained to remove the liquid whey, resulting in a thick and creamy consistency. It is high in protein and low in fat, making it a popular food among health-conscious individuals. Stirred yogurts can also encompass fresh cheeses such as cottage cheeses and the like, e.g. stirred cream cheese, thick cream cheese, *fromage blanc* or *petit* suisse.

Preferably, the non-dairy fermented food product is a stirred yogurt or a set yogurt, preferably a stirred yogurt.

Non-dairy liquid yogurts generally have a low protein content, e.g. around 2%. In contrast with the liquid yogurts, non-dairy set or stirred yogurts generally have a higher protein content. This protein content can vary and can depend especially on the other ingredients used in the non-dairy fermented food product, such as texturizers or oils.

The non-dairy fermented food product of the invention has a total protein content of from 2.5 to 12.0 grams per 100 grams of the non-dairy fermented food product. The protein content can be from 3.0 to 10 grams per 100 grams of the non-dairy fermented food product, advantageously from 3.7 to 8 grams per 100 grams, for example from 3.8 to 5 grams per 100 grams or 5 to 8 grams per 100 grams. In the present disclosure, the protein content is the N6.25 protein content, which can be determined by the Dumas method.

The non-dairy fermented food product of the invention comprises at least fava bean protein. Fava bean protein is the protein present in any fava bean and the non-dairy fermented food product may comprise any ingredient that comprise fava bean protein, especially any fava bean protein extract. Fava bean protein extracts are rich in fava bean protein and can comprise at least 55% of protein based on the dry weight of the protein extract. A fava bean protein extract can be in the form of, for example, a fava bean protein concentrate or a fava bean protein isolate, preferably of a fava bean protein isolate. Preferably, the fava bean protein extract comprises at least 80% of protein based on the dry weight of the protein extract, for example at least 85%. Generally, fava bean protein extract comprises from 80 to 99% of protein based on the dry weight of the protein extract, for example from 85 to 95%. In certain embodiments, fava bean protein extract comprises less than 10% of starch, for example less than 5% of starch. In certain embodiments, fava bean protein extract comprises less than 10% of lipid, for example less than 5% of lipid. Fava bean protein extracts are generally available in a powder form. Various suitable fava bean protein extracts are commercially available, including for example, NUTRALYS® FAVA protein commercialized by the applicant.

The non-dairy fermented food product of the invention can have a fava bean protein content of from 2.5 to 12.0 grams per 100 grams of the non-dairy fermented food product. The fava bean protein content can be from 3.0 to 10 grams per 100 grams of the non-dairy fermented food product, advantageously from 3.7 to 8 grams per 100 grams, for example from 3.8 to 5 grams per 100 grams or 5 to 8 grams per 100 grams. In the present disclosure, the fava protein content is the protein content in the non-dairy fermented food product that is from fava bean source.

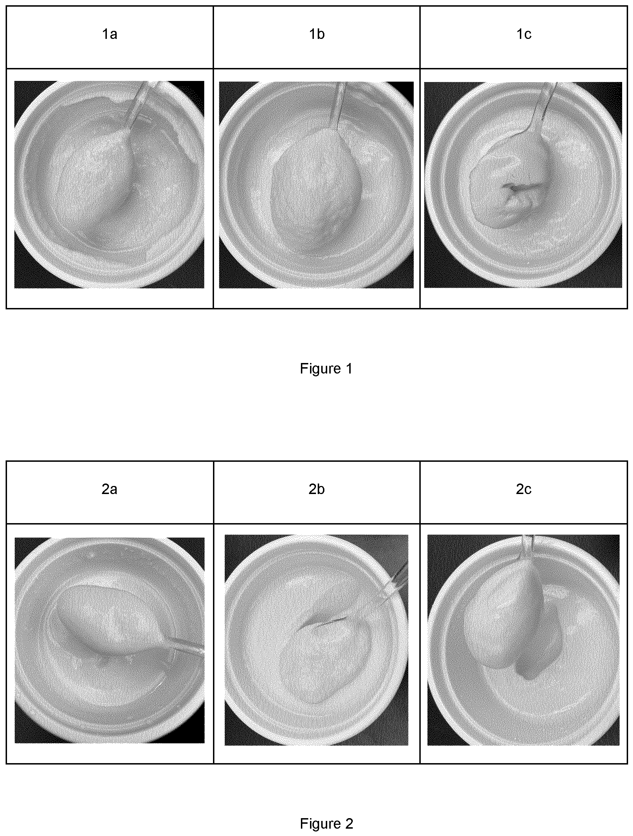

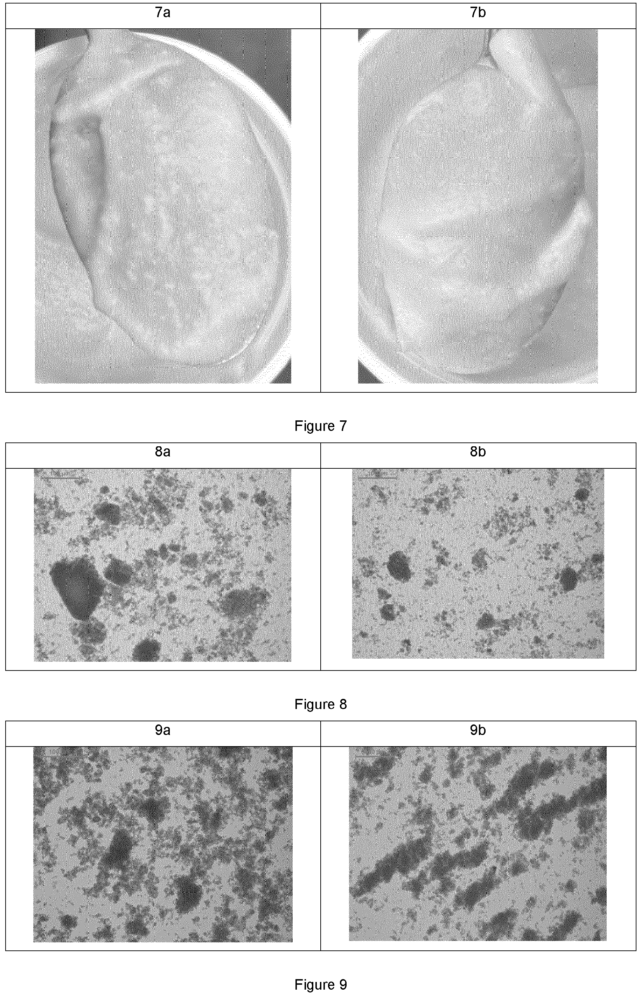

The non-dairy fermented food product has a pH from 3.80 to 4.40 at 5°C. During fermentation, organic acids such as lactic acid or formic acid, are formed, which decreases the pH of the non-dairy fermented food product. As explained above, the non-dairy fermented food product has improved texture and higher firmness than yogurts with higher pH such as the ones described in the prior art. Preferably, the non-dairy fermented food of the invention has a pH from 4.00 to 4.30, for example from 4.15 to 4.30. The pH at 5°C of the non-dairy fermented food product can be determined after having adjusted the temperature of the food product to 5°C with any calibrated suitable pH meter. The non-dairy fermented food product has low grittiness, mouthfeel as demonstrated in the Examples section. As shown in the Figures 1, 6 and 7, the non-dairy fermented food products comprising fava bean protein of the invention has also a smoother aspect on the spoon than fava bean protein fermented food products having higher pHs. Further, optical microscopy confirmed that protein aggregates have lower particle size in 3, 5 and 8 only for the non-dairy fermented food products of the invention. It must be noted that the phenomenon was not observed for fava bean protein fermented food product with lower protein content (Figure 9). These visual observations were confirmed by particle size analysis as determined in the Examples section.

Sugar provides nutrients to lactic acid bacteria during fermentation of the liquid mixture comprising fava bean protein. In the case sugar is not fully transformed during the process of fermentation, the non-dairy fermented food product can comprise sugar. The sugar in the non-dairy fermented food product can thus be the sugars remaining after fermentation herein. Sugar can include any sugar source fermentable by a lactic acid bacterial culture. Examples include sucrose (e.g., table sugar, powdered sugar, and the like), dextrose, fructose, honey, syrups (e.g., maple syrup, corn syrup, and the like), or any other fermentable sugar source. In some embodiments, part or all of the sugar included in a liquid mixture can be from additional ingredients included in the mixture (e.g. a non-dairy milk alternative product). Sugar can be included in any amount sufficient to support fermentation such that the pH of the non-dairy fermented food product ranges from 3.80 to 4.40. In some embodiments, the sugar can also contribute to sweetness of a non-dairy fermented food product provided herein. Preferably, the non-dairy fermented food product can have a quantity of sugar going from 0.5% to 10% by weight. Sugar can also be added after the fermentation process to bring sweetness to the non-dairy fermented food product.

The non-dairy fermented food product of the invention can have a dry matter going from 4 to 30% by weight, for example from 5 to 20% by weight, in particular from 6 to 15% by weight. Any suitable liquid may be used to disperse the other ingredients comprising dry matter to obtain the targeted dry matter of the non-dairy fermented food product. Liquid may be water or a non-dairy milk alternative. In a preferred embodiment, the non-dairy fermented food product comprises a non-dairy milk alternative product. A non-dairy milk alternative product can be included in a liquid mixture in an amount of up to 95% or up to 60% (e.g., up to 50%, or from about 15% to about 40%) by weight of the non-dairy fermented food product. A non-dairy milk alternative product can be from any plant source, such as, without limitation, nuts (e.g., almond, cashew, coconut, and the like), grains (e.g., oat, rice, barley, and the like), legumes (e.g., peanut, soy, lupin, pea, and the like), seeds (e.g., chia seed, flaxseed, sesame seed, sunflower seed, hemp seed, and the like), or any combination thereof. Preferably, the non-dairy milk alternative is chosen from oat milk product, an almond milk product, rice milk product or a coconut milk product, preferably oat milk product, rice milk product or an almond milk product. A non-dairy milk alternative product can contribute to flavor and/or nutritional content of the non-dairy fermented food product provided herein.

Although a liquid mixture including only fava bean protein and sugar is sufficient for use in a method provided herein, in some embodiments, additional ingredients can be included in a liquid mixture. Examples of additional ingredients that can be included in a liquid mixture include an additional protein extract and/or an oil.

Preferably, the fava bean protein represents at least 25% of the protein content of the non-dairy fermented food product, preferably at least 50% of the protein content, for example the totality of the protein content. The portion of protein of the non-dairy fermented food product other than fava bean protein can be from any other source of protein, preferably chosen from non-dairy source of protein other than fava bean protein, for example plant-based protein other than fava bean protein. Plant-based protein other than fava bean protein can be chosen from all proteins derived from cereals, oilseeds, legumes, and tuberous plants, as well as all proteins derived from algae and microalgae or fungi, used alone or in mixtures, chosen from the same family or from different families. Several legumes are important cultivated plants, including soybeans, beans, especially mung beans, chickpeas, peas, peanuts, cultivated lentils, cultivated alfalfa, carob, licorice, and lupine. As examples of pea proteins, NUTRALYS® PEA, such as NUTRALYS® PEA S85F or NUTRALYS® PEA F85M. In this application, the term "cereals" refers to cultivated plants of the grass family producing edible grains, such as wheat, oats, rye, barley, corn, sorghum, or rice. As an example of wheat proteins, NUTRALYS® W marketed by the Applicant can be cited. As examples of rice proteins, NUTRALYS® RICE 800XF and NUTRALYS® RICE 850XF can be cited. Tuberous plants can be carrots, cassava, konjac, potatoes, Jerusalem artichokes, and sweet potatoes. Oilseed plants are generally plants that produce seeds from which oil is extracted. Oilseed plants can be chosen from sunflower, rapeseed, almonds, nuts, peanuts, sesame, pumpkin, or flax. Any ingredient comprising such protein, such as an additional protein extract, e.g. a protein concentrate or a protein isolate, or the non-dairy milk alternative product can be used to bring the protein other than fava bean protein in the non-dairy fermented food product. The protein extract is an ingredient rich in protein and can comprise at least 55% of protein based on the dry weight of the protein extract.

The non-dairy fermented food product can also comprise lipids. For example, the non-dairy fermented food product can have a quantity of lipids going from 0.1 to 10% by weight of the food product. Alternatively, the non-dairy fermented food product can be free of lipids. Any ingredient comprising such lipids such as oils or a non-dairy milk alternative product can be used to bring the desired lipid content. Oil can be any edible oil, including, without limitation, vegetable oils, such as coconut oil, coprah oil, palm oil, soy oil, canola oil, sunflower oil, sesame oil, corn oil or peanut oil one of their fractions and/or modifications thereof, and combinations thereof, preferably sunflower oil or canola oil. Though it is preferred that ingredients in a fermented non-dairy food product provided herein be vegetarian, in some embodiments, a fat can be a dairy fat. Oil can contribute to flavor and/or nutritional content of a non-dairy fermented food product provided herein. Oil can also contribute to the firmness of a non-dairy fermented food product provided herein. As explained above, oils having a melting temperature higher than 10°C are poor in unsaturated fatty acids which have health benefits. According to an embodiment, the non-dairy fermented food product has a quantity of oil having a melting temperature higher than 10°C below 0.1% by weight of the food product, preferably is free of oil having a melting temperature higher than 10°C.

In some embodiments, the non-dairy fermented food product can be combined with additional ingredients, such as fruit and/or vegetables (e.g., whole fruit and/or vegetables, fruit and/or vegetable pieces, fruit and/or vegetable puree, fruit and/or vegetable juice, fruit and/or vegetable preparations, and the like) or flavorants/colorants (e.g., sweeteners, or fruit and/or vegetable puree, juice, chocolate, spices, coconut, extracts, and the like) to provide a desired flavor and/or appearance. In some embodiments, ingredients that provide a desired flavor and/or appearance can be mixed into a non-dairy fermented food product or can be included in packaging without mixing with the non-dairy fermented food product (e.g., "fruit-on-the-bottom"). The non-dairy fermented food product can be packaged in any appropriate packaging suitable for storage and/or sale of the product. Examples include, without limitation, multi-serving containers (e.g., cartons or bags), individual-serving plastic cups, glass containers, and flexible tubes.

The non-dairy fermented food product can be packaged alone, or with additional ingredients. For example, a non-dairy fermented food product can be packaged with an ingredient, such as a grain ingredient (e.g., rolled oats, granola, and the like), a seed ingredient (e.g., chia seeds, sunflower seeds, and the like), a nut (e.g., coconut, almond, and the like), or other ingredient (e.g., a sauce, peanuts, a sweetener, and the like), either combined with the non-dairy fermented food ingredient, or in a separate part of the packaging as a kit to be consumed as desired by the consumer.

As demonstrated in the Examples section, it is also possible to obtain firmer fava bean protein fermented food product, and this even in the case it does not comprise added texturizer. It is even more surprising that this improvement was not observed in the prior art for other leguminous plant protein such as pea protein, as confirmed by examples of non-dairy fermented food products comprising pea protein in Example 2.

However, a non-dairy fermented food product comprising a texturizer is also encompassed by the present invention. As used herein, the term "texturizer" refers to a carbohydrate ingredient other than sugar, i.e. an ingredient comprising more than 90% of carbohydrates, that is added to the formulation of the non-dairy fermented food product in order to contribute to its firmness. Examples include starches (e.g., tapioca starch, corn starch, rice starch, potato starch, wheat starch, cassava starch, corn flour, and the like) including chemically and/or physically modified starches, pectins such as vegetable or fruit fibers (e.g. citrus fiber or pectin, apple pectin or potato fiber and the like), gums (e.g., locust bean gum, carob bean gum, guar gum, and the like), hydrocolloids (e.g., alginate, agar, carrageenan and the like). It is to be understood that "texturizer" does not include impurities, such as pectins or starches incidentally included from fruit, vegetable, non-dairy milk, or protein ingredients cited previously.

Preferably, the non-dairy fermented food product has a quantity of texturizer below 0.1% by weight, preferably is free of texturizer.

In some embodiments, the non-dairy fermented food product provided herein can be packaged without killing the lactic acid bacteria culture used to ferment the product, so as to include live and active lactic acid bacteria. It is thus an embodiment of the invention that the non-dairy fermented food product further comprises a live and active lactic acid bacterial culture. The lactic acid bacterial culture can comprise one or more of Streptococcus thermophilus, Lactobacillus delbrueckii bulgaricus, Lactobacillus acidophilus, Lactobacillus paracasei, Lactobacillus plantarum, Lactobacillus rhamnosus, Bifidobacterium animalis lactis, and Weissella cibaria. In some embodiments, the non-dairy fermented food product provided herein can be heated to kill bacteria in the food product, so that the product can be stored at temperatures above refrigeration temperatures without spoiling.

The non-dairy fermented food product can include other ingredients such as amino acids or blends of amino acids, peptides, inactive yeast, yeast extracts, minerals or vitamins. Generally, the weight quantities of amino acids or blends of amino acids, peptides, inactive yeast, yeast extracts, minerals or vitamins are at most 0.5% of the non-dairy fermented food product. The sum of these weight quantities are generally at most 1% of the non-dairy fermented food product.

The firmness of the non-dairy fermented food product can be higher than 30 grams, for example higher than 40 grams, for example higher than 50 grams, advantageously higher than 60 grams. The firmness of the non-dairy fermented food product can be lower than 1000 grams, for example lower than 750 grams or lower than 500 grams or for example between 40 grams and 1000 grams, or between 50 grams and 750 grams or between 60 grams and 500 grams. As explained above, the protein content of the non-dairy fermented food product has an impact on its firmness. One of the advantages of the non-dairy fermented food product of the invention is that it has a higher firmness than a non-dairy fermented food product with the same protein content (same formulation) but with a higher pH. The non-dairy fermented food product can have a ratio firmness / protein content above 10, the firmness being expressed in grams and the total protein content being expressed in grams per 100 g of the non-dairy fermented food product. Preferably, the non-dairy fermented food has a ratio firmness / protein content above 13, preferably above 15.

Firmness can be determined at 4°C with a texture analyzer. The firmness can be determined after 7 days of storage at 4°C after manufacturing. A detailed method can be found in the Examples section.

Preferably, the non-dairy fermented food product has a particle size Dmode lower than 40 $\mu$m, for example lower than 30 $\mu$m or lower than 20$\mu$m. Dmode can be higher than 5 $\mu$m, for example higher than 10 $\mu$m or higher than 15$\mu$m. Dmode can be determined by laser granulometry using Mie theory. This can be determined by a particle size analyzer using the manufacturer's manual. A detailed method is disclosed in the Examples section.

Another object of the invention is also a method of making the non-dairy fermented food product of the invention.

The method comprises a hydration step of the fava bean protein extract comprising a shear mixing of the fava bean protein extract into a liquid, preferably at a temperature ranging from 40 to 75°C to form a liquid mixture, generally from 50 to 60°C.

As demonstrated in the Examples section, this hydration step has the ability to decrease the particle size of the fava bean protein, and this decreases even further the grittiness texture of the non-fermented food product obtained.

Shear mixing can be achieved by using any mixer providing shear such as a rotative mixer, a planetary mixer, a rotor-stator mixer, or any type of high-shear mixer. Shear mixer may be a Silverson mixer.

Temperature during shear mixing can be set up using the classic apparatus to heat a liquid, such as heat exchangers.

Preferably the duration of the hydration step goes from 10 to 60 minutes, more preferably from 15 to 30 minutes.

The liquid to be used to mix the fava bean protein extract to the liquid can be water and/or the non-dairy milk alternative described above. It is also possible to have a first shear mixing stage of the fava bean protein extract in only a portion of the water and/or non-dairy milk alternative and adding in a second stage the other portion of the water and/or non-dairy milk alternative to form the liquid mixture. Preferably, no ingredient other than the fava bean protein extract, the water and the non-dairy milk alternative is used during the hydration step. Alternatively, sugar is also used during the hydration step.

The liquid mixture obtained is to be heated to a temperature of from about 65° C to about 120° C for sufficient time to produce a thermally treated liquid. In some embodiments, the liquid mixture can be heated for sufficient time and temperature to reduce microbial content in the liquid mixture. For example, in some embodiments, the liquid mixture can be heated at a temperature and time sufficient to result in a greater than a 4 log reduction (e.g., at least a 5 log, or at least a 6 log reduction) in S. aureus, E. coli, L. monocytogenes, and/or Salmonella. Similar to pasteurization, a lower temperature heat treatment over a long period of time can achieve similar results to a higher temperature heat treatment over a shorter period of time. For example, a heating of 95°C during 5 minutes generally corresponds to a heating at 90°C during 15 minutes or to a heating at 100°C during 90 seconds or to a heating at 120°C during 1 second. Preferably, the duration of the heating is from 1 minute to 30 minutes. In an embodiment, the heating temperature goes from 75 to 95°C and the heating duration goes from 3 to 15 minutes.

Depending on the nutritional facts targeted for the non-dairy fermented food product, the quantity of sugars to proceed to the fermentation such that it can reach the desired pH and the sugar content expected in the non-dairy fermented food product, liquid mixture can further comprise additional sugar. Thus, the process of the invention comprises optionally shear mixing a sugar with the liquid mixture. Preferably, the thermally treated liquid to be inoculated comprises sugar in an amount of from 0.5% to 10% by weight. Useful sugars are described above.

Depending on the nutritional facts targeted for the non-dairy fermented food product and the lipid content expected, liquid mixture can further comprise additional oil. Thus, the process of the invention comprises optionally shear mixing an oil with the liquid mixture. The liquid mixture can comprise lipid in an amount of up to 10% by weight. Useful oils are described above.

The process of the invention can further comprise homogenizing the liquid mixture by high-pressure homogenization. Alternatively, the process of the invention can further comprise homogenizing the thermally treated liquid mixture by high-pressure homogenization. In another embodiment, the process of the invention further comprises homogenizing the liquid mixture and homogenizing the thermally treated liquid by high pressure homogenization. High pressure homogenization is a process in which a fluid mixture is forced through a small orifice under high pressure. In the process of the invention, the high-pressure homogenization is preferably conducted at a pressure ranging from 50 to 500 bar, for example from 100 to 300 bar. There are different types of high-pressure homogenization techniques that can be used. It can include single-stage homogenization, two-stage homogenization, multiple-stage homogenization or jet homogenization. In the case the liquid mixture was not previously heated, a pre-heating step can take place before homogenization.

The process of the invention further comprises inoculating the thermally treated liquid mixture with a lactic acid bacterial culture. The useful cultures that can be used are described above. It also comprises fermenting the thermally treated liquid mixture until its pH ranges from 3.80 to 4.40 to form the fermented food product. Preferably, the fermenting of the thermally treated liquid mixture is conducted until its pH ranges from 4.00 to 4.30 or from 4.15 to 4.30. Fermentation can be performed using any appropriate conditions. For example, fermentation can be performed at a temperature range of from about 35° C to about 50° C (e.g., at about 35° C to about 45° C, or at about 40° C, or at about 43° C), as appropriate for the selected lactic acid bacteria culture.

The duration of the fermentation step is chosen such that the targeted pH is reached. Some fermentation accelerators can be used into the thermally treated liquid mixture to decrease the fermentation time, such as for example additional amino acids, yeast extract or inactive yeast. The pH can be controlled and determined at the temperature of the fermentation using any suitable calibrated pH meter. In some embodiments, the ingredients and ferments are selected to achieve a pH of 3.80 to 4.40 in a time of less than 24 hours (e.g., less than 12 hours, or 8 hours or less, or 6 hours or less).

Fermentation step can be performed in a large container and later portioned into packaging suitable for sale, or can be performed in packaging suitable for sale.

In some embodiments, the method further comprises a stirring of the fermented food product. This step is useful to obtain stirred yogurts. It can be conducted to obtain stirred yogurts with desired texture.

Fermentation can be slowed or stopped using any appropriate method (e.g., by cooling the fermented food product to a temperature of less than about 30° C using, for example, a heat plate exchanger.).

In some embodiments, a non-dairy fermented food product can be filtered after fermentation. For example, a non-dairy fermented food product can be passed through a mesh filter (e.g., 300 $\mu$m to 500 $\mu$m mesh).

The non-dairy fermented food product provided herein can be stored at refrigeration temperatures (e.g., above freezing to about 10° C, or about 4° C to about 10° C) for at least 10 days (e.g., at least 20 days or at least 30 days). In some embodiments, where the non-dairy fermented food product is treated (e.g., heated) to kill lactic acid bacteria, the non-dairy fermented food product can be stored at temperatures above refrigeration temperatures (e.g., about 15° C to about 40° C, or about 20° C to about 35° C) for at least 30 days (e.g., at least 60 days, or at least 90 days).

The non-dairy fermented food product can be packaged in any appropriate packaging suitable for storage and/or sale of the product. Examples include, without limitation, multi-serving containers (e.g., cartons or bags), individual-serving plastic cups, glass containers, and flexible tubes.

## Examples

### Materials

The following components were used in the recipes to manufacture the non-dairy fermented food products in the Examples section:

- NUTRALYS® FAVA S900M (Roquette Frères): Fava bean protein isolate
- NUTRALYS® PEA S85F (Roquette Frères): Pea protein isolate
- NuCel 751 MG (Procelys by Lesaffre): Yeast extract
- Vega Harmony (CHR HANSEN): lactic starter
- Nutrava® ZEST (CP Kelco): Citrus Fiber
- Cal-Sistent® (ICL): Tricalcium phosphate,
- TENDRA® (Cosun): Fava bean protein isolate
- Dextrose mono hydrate powder (Roquette Frères)
- Sucrose
- Sunflower oil
- Rapeseed oil
- Potable decarbonated water for yogurt manufacturing

### Methods

#### Firmness analysis

The yogurt sample is poured in a cylinder container (diameter 50mm, height 650 mm) in order to fill it to the % (around 100 mL). A texture analyzer (TA.XT2 Plus Texture Analyser, Stable Micro Systems) is equipped with a cylindric probe of 35mm (probe A/BE-D35) and programmed using the texture analyzer software. Before analysis, the product is stirred 10 times by a spoon (10 circles) and then the container is stored in the fridge at 4°C for 10 min. The pre-test and test speeds are 1mm/sec, the post-test speed is 10mm/sec, the deformation is 50% and the trigger force is 5g. The firmness is the maximum value collected during the test. It is expressed in grams (g). Firmness was determined after 7 days of storage.

#### Particle size distribution

Particle size distribution was measured with a MASTERSIZER 3000 from MALVERN equipped with a dispersion system HYDRO LV with a dispersing volume of 600ml (demineralized water). Before the dispersion in the tank of the particle size analyzer, the sample was homogenized by magnetic stirring and carefully to avoid air bubbles formation. The non-dairy fermented food product was dispersed in the tank of particle size analyzer with demineralized water (IR=1.33). The stirring was 1900rpm. Obscuration was between 5% and 10% and stable before the measurement.

Optical microscopy

Yogurt samples are observed by optical microscopy with a light microscope equipped with a camera. A drop of yogurt is placed on a microscope slide and the product is spread on the square surface. One drop of distilled water is added to lighten the content and facilitate the observation of particles and one drop of Fast Green to color the protein in the mix. The mix is homogenized before putting a glass cover on top and cleaning the edges with a paper towel. Then the slide is placed under the microscope to start observation. The two objectives used are the x10 or the x20 to realize the pictures and are used respectively while changing the aperture iris diaphragm between 1 for the objective x10 and 1,5 for the objective x20.

Taste and texture assessment

Tasting session with 5 panelists with a pivot profile method was used and tasting occurred 14 days after production. The control is positioned as the reference and all samples are compared to the control. The people who taste the products have to describe the samples as "much more", "more", "slightly more", "equal", "slightly less", "less" or "much less" compared to the control, for each criteria. A second control was also added with a code (for blind tasting) in the set of samples, to check the ability of the panelists to discriminate the control from the trials.

The product is sheared with the spoon: 5 turns clockwise, 5 turns counter-clockwise and the assessed criteria were as follows:

- Smoothness assessed in the mouth,
- Thickness assessed visually with the spoon

**Experiments**

Example 1: impact of the conditions of time and temperature on the efficiency of the hydration step

When producing leguminous plant-based yogurts, the inventors have observed that the hydration of the protein can significantly impact its performance to provide firmness to the yogurt and the smoothness of the texture. Inventors have investigated what are the best conditions to hydrate fava bean protein by studying the impact of the conditions of time, shearing and temperature on its solubility in a water solution.

A mixer Silverson L5M-A with the disintegration head provided by Silverson was used to compare the solubility of the fava protein in different conditions of heat (20°C-50°C-70°C), shear rate (3500-7500 RPM) and time (0 to 60 minutes) at a concentration of 5% of protein.

Weigh 58.5g of NUTRALYS® FAVA S900M (for 5% of protein content) and 941.5g of demineralized water in two separated vessels to prepare 1L of solution (preheat the water if the hydration is at 50°C or 70°C with a kettle).

Temperature is maintained during the experiment with a plate heater

Disperse the protein into the water using a whisk without incorporating too much foam.

Remove precisely 40g of the main batch (right after stirring the preparation) with a syringe and put this sample in a plastic tube using a 0,00 weighting scale.

Centrifuge it during 15 minutes at 3000 RCF, (T0) weigh the supernatant of the T0 solution.

For each temperature (20°C,50°C or 70°C), shear mix at 3500 or 7500 RPM the rest of the solution with the Silverson into the main batch

Hydrate during 20, 40 or 60 minutes

After the 20 minutes of hydration, turn off the Silverson and remove 40g of the batch and centrifuge it during 15 minutes at 3000 RCF (T1: T+20min). Recover and weigh the supernatant of the T+20min solution (T1)

Restart shear mixing. After the 40 min of hydration, turn off the Silverson and remove 40g of the batch and centrifuge it during 15 minutes at 3000 RCF (T2: T+40min). Recover and weigh the supernatant of the T+40min solution (T2)

Restart shear mixing. After the 60 min of hydration, turn off the Silverson and remove 40g of the batch and centrifuge it during 15 minutes at 3000 RCF (T3: T+60min). Recover and weigh the supernatant of the the T+60min solution (T3)

Measure the dry matter of each supernatant using a lab dryer Calculate the dry matter of the supernatant regarding the weight (SupF) = supernatant weight * (dry matter/100) Calculate the theoretical D.M. (dry matter) of the supernatant if the protein extract was 100% soluble while considering the D.M. of the fava protein protein (93%) (Supl) = supernatant weight * ((g of protein extract*0.93)/100)

Calculate the Solubility (SupF/l) = SupF / Supl

The results obtained for the different conditions are reported in the tables below:

| test | 20°C - 3500 RPM | | | | 50°C - 3500 RPM | | | | 70°C - 3500 RPM | | | |
|---|---|---|---|---|---|---|---|---|---|---|---|---|
| time (min) | 0 | 20 | 40 | 60 | 0 | 20 | 40 | 60 | 0 | 20 | 40 | 60 |
| Solubility | 5% | 43% | 57% | 61% | 21% | 81% | 81% | 80% | 50% | 85% | 88% | 93% |

| test | 20°C - 7500 RPM | | | | 50°C - 7500 RPM | | | | 70°C - 7500 RPM | | | |
|---|---|---|---|---|---|---|---|---|---|---|---|---|
| time (min) | 0 | 20 | 40 | 60 | 0 | 20 | 40 | 60 | 0 | 20 | 40 | 60 |
| Solubility | 3% | 68% | 81% | 84% | 22% | 85% | 87% | 90% | 44% | 90% | 87% | 95% |

Fava protein extract hydration is sensitive to temperature, shear and time. Increasing the temperature at 50°C or 70°C improves the hydration of the fava protein. Increasing the shear rate can improve the hydration speed of the fava protein, however, the improvement is less significant for shorter shearing time (e.g. 20 minutes). The duration of the process improves the hydration. After 20 minutes at a temperature of 50°C or higher, the solubility of the protein doesn't evolve much (at the same temperature and shear rate).

Example 2: Influence of pH on the properties of yogurts comprising fava bean protein or pea protein

Non-dairy fermented food products were manufactured with the following ingredients and quantities (total of ingredients for each trial 12 kg):

| Ingredients (%) | Pea protein yogurt (%weight) | Fava bean protein yogurt (%weight) |
|---|---|---|
| Water | 88.24 | 88.34 |
| NUTRALYS® S85F | 5.10 | 0.00 |
| Sucrose | 4.20 | 4.20 |
| Sunflower oil | 2.40 | 2.60 |
| Yeast extract | 0.04 | 0.04 |
| Lactic starter | 0.02 | 0.02 |
| NUTRALYS® FAVA S900M | 0.00 | 4.80 |

Calculated nutritional values were as follows:

| Nutritional values (/100g) | Pea and fava bean protein yogurt |
|---|---|
| Energy value (kcal) | 58.86 |
| Total fat (g) | 2.86 |
| of which, saturated fat (g) | 0.35 |
| Carbohydrates, without fibres (g) | 4.19 |

(continued)

| Nutritional values (/100g) | Pea and fava bean protein yogurt |
|---|---|
| of which, sugars (g) | 4.16 |

| | |
|---|---|
| Fibers (g) | 0.06 |
| Protein (g) | 4.05 |
| Salt (sodium x2,52) (g) | 0.11 |

Non-dairy fermented food products were manufactured with the following process:

1- Heat the water at 55°C with a plate heater and hydrate the proteins in the water for 20min and mix with the Silverson AX5 (2500rpm)

2- Add sucrose and continue the mixing for 2min, at 55°C

3- Add sunflower oil and continue the mixing for 5min at 5000 rpm and 55°C

4- Transfer the liquid in the OMVE HT-220 tubes exchanger, pre-heat at 75°C and homogenize in OMVE HP202-30-2-400-B using 2-stage HP homogenization at 180 bars (1st stage 140bar, 2nd stage 40bar)

5- Pasteurize at 95°C during 5 min in the OMVE HT-220 tubes exchanger

6- Cool at 44°C in the same apparatus

7- Add starters cultures Vega Harmony and yeast extract

8- Maintain at 43°C (drying oven) until reaching the targeted pH (4,30, 4,80, 5,30)

9- Stir with IKA magic LAB smoothing machine at 7000rpm, with the 4M + 2G modules

10- Pack and store at 4°C

The pH at 5°C was determined for each non-fermented food product and their firmness was determined after 7 days of storage. Results obtained are reported in the Table below:

| Trials | pH in cup | Firmness (g) |
|---|---|---|
| FAVA 1 | 5.29 | 24.1 |
| FAVA 2 | 4.79 | 43.3 |
| FAVA 3 | 4.30 | 65.3 |
| PEA 1 | 5.18 | 24.1 |
| PEA 2 | 4.65 | 49.5 |
| PEA 3 | 4.29 | 43.1 |

The results demonstrate the specific behavior of fava bean protein-based yogurts. Indeed, fava bean and pea protein are both leguminous plant proteins; as expected and described in the prior art, pea protein yogurts have highest firmness at a pH of around 4.6 (PEA 2 with a firmness of around 50 grams). Results showed that decreasing the pH of the pea protein yogurt at a pH around 4.3 led to firmness decrease of the pea protein yogurt (PEA 3 having a firmness of 43 grams). On the opposite, in the case of fava bean protein yogurts, it was possible to increase even more the firmness of the yogurt by decreasing the pH to around 4.3 (FAVA 2 had a firmness of 43 grams whereas FAVA 3 showed a firmness of 65 grams).

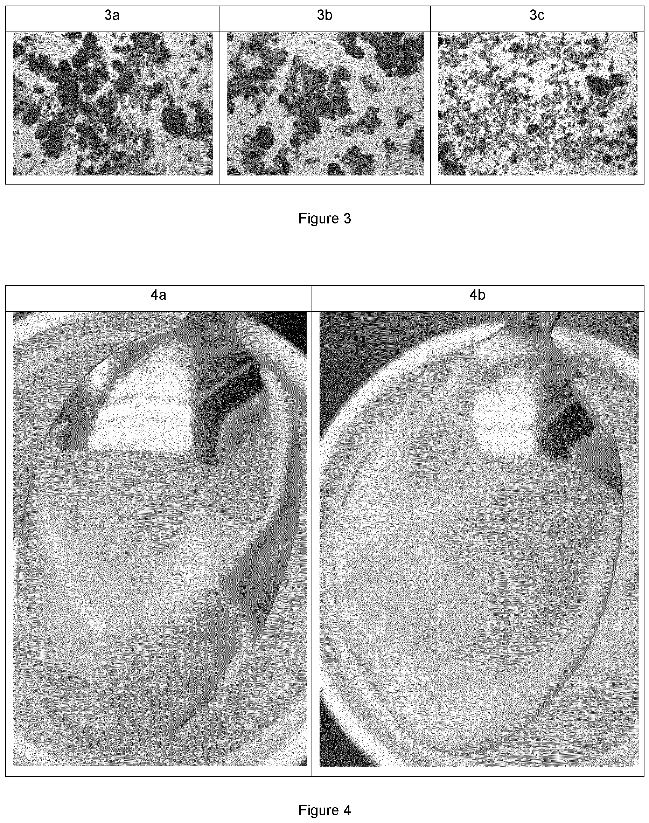

Further, the observations of the Figures 1a to 1c demonstrate that, in the case of fava bean protein yogurts, when putting the yogurt on the spoon, a grainy aspect and/or a strong orange peel appearance were present for yogurts having a pH of 4.7 and 5.3. This phenomenon totally disappeared, and the visual aspect of the yogurt with a pH around 4.3 was totally smooth. The Figures 3a to 3c are photographs of the corresponding yogurts done using optical microscopy: this shows a great improvement of the dispersion of the protein particles in the yogurt when the pH of the fava bean protein fermented food product decreases. This better dispersion probably enables the protein to better build the network necessary for the gel structure leading to a firm texture. On the opposite, the observation of the pea protein yogurts of Figures 2a to 2c did not show similar trend, the pea protein yogurt with a pH of 4.6 being visually similar on the spoon to the one with a pH of 4.3.

This series of examples demonstrated that the texture of the non-dairy fermented food products comprising fava bean proteins, especially the grainy visual aspect and the firmness, can be improved with the invention. It also demonstrated that the fava bean protein yogurts properties do not evolve with the pH in the same way as other leguminous plant protein yogurts such as pea protein yogurts.

Example 3: Comparative fava bean protein yogurts

In this example, the two different fava bean protein extracts indicated in the materials section were evaluated for yogurt manufacturing with the recipe and the process of the prior art indicated on the website: https://www.cosunprotein.com/tendra/substitutes/plant-based-dairy-alternatives.

Yeast extract was added to the recipe to decrease the fermentation time.

Non-dairy fermented food products were manufactured with the following ingredients and quantities (total of ingredients for each trial 1,45 kg):

| Ingredients | Yogurt 1 %weight | Yogurt 2 %weight |
| --- | --- | --- |
| Water | 87.14 | 87.14 |
| Dextrose mono hydrate powder | 4.00 | 4.00 |
| Rapeseed oil | 2.50 | 2.50 |
| NUTRALYS® FAVA S900M (Roquette Frères) | 6.00 | |
| Nutrava® ZEST Citrus Fiber | 0.20 | 0.20 |
| Tricalcium phosphate, Cal-Sistent | 0.10 | 0.10 |
| Yeast extract | 0.04 | 0.04 |
| Lactic starter | 0.02 | 0.02 |
| TENDRA® (Cosun) | | 6.00 |

Non-dairy fermented food products were manufactured with the following process:

1- Hydrate proteins in water at room temperature for 30min with Hotmix (800rpm)

2- Add dextrose, citrus fiber and tricalcium phosphate and wait for 5min (800rpm)

3- Add rapeseed oil at 1800 rpm and wait for 1min

4- Pasteurize at 90°C during 30sec (800rpm)

5- Cool at 75°C and homogenize with a 2-stage homogenizer at 200/50 bars (GEA Panda Plus 1000)

6- Cool at 44°C and measure pH, adjust pH to 7,20 with citric acid if needed

7- Add starters cultures and yeast extract

8- Maintain at 43°C (drying oven) until reaching pH 4,50

9- Stir with IKA magic LAB smoothing machine at 7000rpm, with the 4M + 2G modules

10- Pack and store at 4°C

The pH at 5°C was determined for each non-fermented food product and their firmness were determined after 7 days of storage. Results obtained are reported in the Table below:

| Trials | pH in cup | Firmness (g) |
|--------|-----------|--------------|
| Yogurt 1 | 4.50 | 115.5 |
| Yogurt 2 | 4.50 | 98.5 |

Both yogurts presented good firmness, the one comprising NUTRALYS® FAVA S900M being slightly firmer. However, with the recipe and process disclosed, the visual texture did not give full satisfaction because both presented a similar grainy texture on the spoon after stirring (Figures 4a for yogurt 1 and 4b for yogurt 2). It follows that if it was possible to increase the firm texture of the yogurt by adding additional ingredients such as citrus fiber, this did not solve the problem of grainy texture observed when using fava bean protein for manufacturing yogurts. If the selection of one protein extract (NUTRALYS® FAVA S900M) can improve the firmness of the yogurt, it was not possible to solve the problem of grainy aspect of the yogurt having a pH of 4.5 with this process and recipe.

Example 4: Fava bean yogurts with different protein contents

Yogurts with 4% by weight of fava bean protein

Non-dairy fermented food products were manufactured with the following ingredients and quantities (total of ingredients for each trial 7 kg):

| Ingredients | %weight |
|-------------|---------|
| Water | 88.10 |
| NUTRALYS® FAVA S900M | 4.90 |
| Sucrose (sugar) | 4.20 |
| Sunflower oil | 2.75 |
| Yeast extract | 0.03 |
| Lactic starter | 0.02 |

Non-dairy fermented food products were manufactured with the following process:

1- Heat the water at 55°C with a plate heater and hydrate the proteins in the water for 20min and mix with the Silverson AX5 (3500rpm)

2- Add sucrose and continue the mixing for 2min, at 55°C

3- Add sunflower oil and continue the mixing for 5min at 7500 rpm and 55°C

4- Transfer the liquid in the OMVE HT-220 tubes exchanger, pre-heat at 75°C

5- Pasteurize at 95°C during 5 min in the OMVE HT-220 tubes exchanger and homogenize in OMVE HP202-30-2-400-B using 2-stage HP homogenization at 180 bars (1st stage 140b, 2nd stage 40b)

6- Cool at 44°C in the same apparatus

7- Add starters cultures Vega Harmony and yeast extract

8- Maintain at 43°C (drying oven) until reaching the targeted pH 4,90 / pH 4,60 / pH 4,30

9- Stir with IKA magic LAB smoothing machine at 7000rpm, with the 4M + 2G modules

10- Pack and store at 4°C

The pH at 5°C was determined for each non-fermented food product was determined after 7 days of storage. The particle size of the different yogurts was also analyzed with the method described above and Dmode were calculated. Sensory evaluation was also conducted to determine two attributes: the presence of grittiness during tasting (smoothness in mouth) and the visual spoon thickness. Yogurt n°2 was used as the control yogurt for assessing both parameters.

Results obtained are reported in the Table below:

| Yogurt | pH | Dmode ($\mu$m) | Spoon thickness | Smoothness in mouth |
|--------|------|------|-----------------|---------------------|
| 1 | 4.90 | 72 | Slightly less | Slightly less |
| 2* | 4.62 | 50 | Equal | Equal |
| 3 | 4.32 | 27 | More | More |
| *: blind control | | | | |

First, it is noted that the blind control showed equal spoon thickness and smoothness in mouth than the control.

Assessment of the spoon thickness by the panel showed that the yogurt 3 with a pH 4.32 has a thicker aspect in the spoon than the others yogurts. This observation is in line with the firmness evaluation by texture analysis for the yogurt of Example 2.

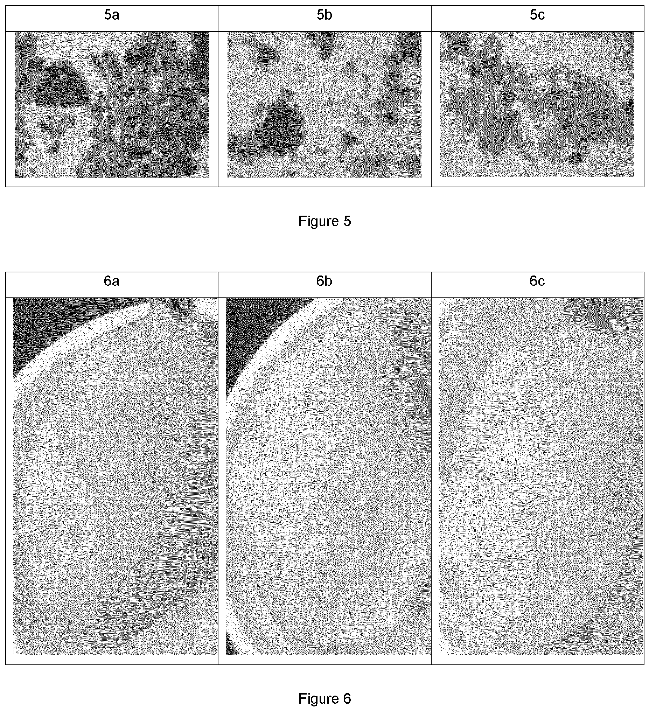

Further, microscope observations were conducted and Figures 5a (yogurt 1), 5b (yogurt 2) and 5c (yogurt 3) show that, when the pH of the yogurt decreases, the quantity of aggregates also decreases; the yogurt with the best dispersion of the protein observed has a pH of 4.32. This is in line with the observations of the visual texture of the yogurts on the spoon as shown with the Figures 6a (yogurt 1), 6b (yogurt 2) to 6c (yogurt 3). Similarly, the smoothness in the mouth was also more important with the non-fermented food product of the invention.

Yogurts with 6% by weight of fava bean protein

Non-dairy fermented food products were manufactured with the following ingredients and quantities (total of ingredients for each trial 7 kg):

| Ingredients | %weight |
|-------------|---------|
| Water | 85.88 |
| NUTRALYS® FAVA S900M | 7.30 |
| Sucrose (sugar) | 4.20 |
| Sunflower oil | 2.57 |
| Yeast extract | 0.03 |

Non-dairy fermented food products were manufactured with the following process:

1- Heat the water at 55°C with a plate heater and hydrate the proteins in the water for 20min and mix with the Silverson AX5 (3500rpm)

2- Add sucrose and continue the mixing for 2min, at 55°C

3- Add sunflower oil and continue the mixing for 5min at 7500 rpm and 55°C

4- Transfer the liquid in the OMVE HT-220 tubes exchanger, pre-heat at 75°C

5- Pasteurize at 95°C during 5 min in the OMVE HT-220 tubes exchanger and homogenize in OMVE HP202-30-2-400-B using 2-stage HP homogenization at 260 bars

6- Cool at 44°C

7- Add starters cultures and yeast extract

8- Maintain at 43°C (drying oven) until reaching pH 4,3 or pH 4,8

9- Stir with IKA magic LAB smoothing machine at 7000rpm, with the 4M + 2G modules

10- Pack and store at 4°C

The sensory evaluation was conducted with Yogurt 2 as yogurt control. The particle size of the different yogurts was also analyzed with the method described above and Dmode were calculated. Firmness evaluation, pH determination and sensory evaluation results obtained are reported in the Table below:

| Yogurt | pH | Firmness (g) | Dmode ($\mu$m) | Spoon thickness | Smoothness in the mouth |
| --- | --- | --- | --- | --- | --- |
| 4 | 4.70 | 329.6 | 71 | more | slightly less |
| 5 | 4.30 | 390.1 | 17 | much more | more |

The table shows the excellent results in smoothness compared to a yogurt having a higher pH with the same protein content. It is even more surprising that, compared to a control yogurt comprising 33% less of protein (yogurt 2), the yogurt 5 of the invention was evaluated being smoother in the mouth. For the non-dairy fermented food product of the invention, firmness and thickness were also improved compared to a yogurt with the same protein content but having a higher pH.

The comparison of Figures 7a (yogurt 4) and 7b (yogurt 5) also demonstrate that the yogurt of the invention has decreased grainy aspect on the spoon, which is corroborated by the particle size analysis conducted and by comparing the observations by light microscopy: Figure 8b (yogurt 5) shows lower agglomerated particles in the non-dairy fermented food product having a pH of 4.30 than in Figure 8a (yogurt 4 with a pH of 4.70).

Yogurts with 2% by weight of fava bean protein

Non-dairy fermented food products were manufactured with the following ingredients and quantities (total of ingredients for each trial 7 kg):

| Ingredients | %weight |
| --- | --- |
| Water | 90.39 |
| NUTRALYS® FAVA S900M | 2.50 |
| Sucrose (sugar) | 4.20 |
| Sunflower oil | 2.86 |
| Yeast extract | 0.03 |

Non-dairy fermented food products were manufactured with the following process:

1- Heat the water at 55°C with a plate heater and hydrate the proteins in the water for 20min and mix with the Silverson AX5 (3500rpm)

2- Add sucrose and continue the mixing for 2min, at 55°C

3- Add sunflower oil and continue the mixing for 5min at 7500 rpm and 55°C

4- Transfer the liquid in the OMVE HT-220 tubes exchanger, pre-heat at 75°C

5- Pasteurize at 95°C during 5 min in the OMVE HT-220 tubes exchanger and homogenize in OMVE HP202-30-2-400-B using 2-stage HP homogenization at 100 bars

6- Cool at 44°C

7- Add starters cultures and yeast extract

8- Maintain at 43°C (drying oven) until reaching pH 4,3 or pH 4,8

9- Stir with IKA magic LAB smoothing machine at 7000rpm, with the 4M + 2G modules

10- Pack and store at 4°C

Firmness evaluation and pH determination results obtained are reported in the Table below:

| Yogurt | pH | Firmness D+7 (g) |
|--------|------|------------------|
| 6 | 4.60 | 41.6 |
| 7 | 4.23 | 43.2 |

The yogurts comprising 2% by weight of protein did not show significant firmness differences whatever the pH. It should be noted also that Figures 9a (yogurt 6) and 9b (yogurt 7) did not show either the differences observed by light microscopy for the yogurts comprising 4 or 6% of protein.

## Claims

1. A non-dairy fermented food product comprising at least fava bean protein and having a total protein content of from 2.5 to 12.0 grams per 100 grams of the non-dairy fermented food product, wherein the food product has a pH at 5°C from 3.80 to 4.40.

2. The non-dairy fermented food product of claim 1, wherein its ratio firmness / protein content is above 10, the firmness being expressed in grams and the total protein content being expressed in grams per 100 g of the non-dairy fermented food product.

3. The non-dairy fermented food product of claim 2, wherein its ratio firmness / protein content is above 13, preferably above 15.

4. The non-dairy fermented food product of any one of claims 1 to 3, wherein the food product has a pH from 4.00 to 4.30.

5. The non-dairy fermented food product of any one of claims 1 to 4, wherein the protein content is from 3.0 to 10 grams per 100 grams of the non-dairy fermented food product, advantageously from 3.7 to 8 grams per 100 grams, for example from 3.8 to 5 grams per 100 grams or from 5 to 8 grams per 100 grams.

6. The non-dairy fermented food product of any one of claims 1 to 5, wherein the firmness of the food product is at least 30g, for example between 40 grams and 1000 grams, or between 50 grams and 750 grams or between 60 grams and 500 grams.

7. The non-dairy fermented food product of any one of claims 1 to 6, wherein the food product has a quantity of texturizer below 0.1% by weight, preferably is free of texturizer.

8. The non-dairy fermented food product of any one of claims 1 to 7, wherein the food product has a quantity of sugar going from 0.5% to 10% by weight.

9. The non-dairy fermented food product of any one of claims 1 to 8, wherein it comprises a non-dairy milk alternative product, for example chosen from an oat milk product, an almond milk product, rice milk product or a coconut milk product, preferably an oat milk product, an almond milk product or a rice milk product.

10. The non-dairy fermented food product of any one of claims 1 to 9, further comprising a live and active lactic acid bacterial culture.

11. A method of making the non-dairy fermented food product of any one of the claims 1 to 10, the method comprising:

- a hydration step of a fava bean protein extract comprising a shear mixing of the fava bean protein extract into a liquid, preferably at a temperature ranging from 40 to 75°C to form a liquid mixture, preferably during 10 to 60 minutes, more preferably during 15 to 30 minutes;
- optionally shear mixing a sugar and/or an oil with the liquid mixture;
- heating the liquid mixture to a temperature of from about 65° C to about 120° C for sufficient time to produce a thermally treated liquid;
- homogenizing the liquid mixture and/or the thermally treated liquid mixture by high pressure homogenization, preferably at a pressure ranging from 50 to 500 bar, for example from 100 to 300 bar;
- inoculating the thermally treated liquid mixture with a lactic acid bacterial culture;
- fermenting the thermally treated liquid mixture until its pH ranges from 3.80 to 4.40 to form the fermented food product.

12. The method of claim 11, wherein the pH ranges from 4.15 to 4.30.

13. The method of claims 11 or 12, wherein the liquid comprises a non-dairy milk alternative product.

14. The method of any of claims 11 to 13, wherein the thermally treated liquid mixture comprises sugar in an amount of from 0.5% to 10% by weight.

15. The method of any of claims 11 to 14, wherein the lactic acid bacterial culture comprises one or more of Streptococcus thermophilus, Lactobacillus delbrueckii bulgaricus, Lactobacillus acidophilus, Lactobacillus paracasei, Lactobacillus plantarum, Lactobacillus rhamnosus, Bifidobacterium animalis lactis, and Weissella cibaria or one of their blends.

| 1a | 1b | 1c |
|----|----|----|
| | | |

Figure 1

| 2a | 2b | 2c |
|----|----|----|
| | | |

Figure 2

| 3a | 3b | 3c |
|---|---|---|
| | | |

Figure 3

| 4a | 4b |
|---|---|
| | |

Figure 4

| 5a | 5b | 5c |
|----|----|----|
| | | |

Figure 5

| 6a | 6b | 6c |
|----|----|----|
| | | |

Figure 6

| 7a | 7b |
|----|----|
| | |

Figure 7

| 8a | 8b |
|----|----|
| | |

Figure 8

| 9a | 9b |
|----|----|
| | |

Figure 9

Europäisches
Patentamt
European
Patent Office
Office européen
des brevets

# EUROPEAN SEARCH REPORT

**Application Number**

EP 24 30 6929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/118243 A1 (NESTLE SA [CH]) 29 June 2023 (2023-06-29) * page 11, line 1 - line 25; claims; example 3 * * page 16, line 21 - page 17, line 10 * ----- | 1-15 | INV. A23C11/10 A23L2/38 A23L11/50 A23L25/00 |
| X | US 2024/292855 A1 (RADIGUET SEBASTIEN [FR] ET AL) 5 September 2024 (2024-09-05) * paragraphs [0020], [0033], [0044], [0064]; claims * ----- | 1-15 | |
| X,D | WO 2022/063901 A1 (NESTLE SA [CH]) 31 March 2022 (2022-03-31) * claims 1, 3, 4, 12 * ----- | 1-15 | |
| A,D | WO 2022/117918 A1 (ODDLYGOOD GLOBAL OY [FI]) 9 June 2022 (2022-06-09) * page 27, line 34 - page 28, line 3; examples * ----- | 1-15 | |
| | | | **TECHNICAL FIELDS SEARCHED (IPC)** |
| | | | A23C A23L |

The present search report has been drawn up for all claims

| Place of search | Date of completion of the search | Examiner |
|---|---|---|
| Munich | 27 March 2025 | Smeets, Dieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6929

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2025

| Patent document cited in search report | Publication date | Patent family member(s) | | Publication date |
|---|---|---|---|---|
| WO 2023118243 A1 | 29-06-2023 | CA | 3240674 A1 | 29-06-2023 |
| | | CN | 118434287 A | 02-08-2024 |
| | | EP | 4451892 A1 | 30-10-2024 |
| | | WO | 2023118243 A1 | 29-06-2023 |
| US 2024292855 A1 | 05-09-2024 | AU | 2022284270 A1 | 14-12-2023 |
| | | BR | 112023025225 A2 | 27-02-2024 |
| | | CL | 2023003602 A1 | 26-07-2024 |
| | | CN | 117412674 A | 16-01-2024 |
| | | EP | 4346420 A1 | 10-04-2024 |
| | | PH | 12023553265 A1 | 22-04-2024 |
| | | US | 2024292855 A1 | 05-09-2024 |
| | | WO | 2022253818 A1 | 08-12-2022 |
| WO 2022063901 A1 | 31-03-2022 | AU | 2021346848 A1 | 16-03-2023 |
| | | BR | 112023004900 A2 | 18-04-2023 |
| | | CL | 2023000779 A1 | 03-11-2023 |
| | | CN | 116685206 A | 01-09-2023 |
| | | EC | SP23022055 A | 31-05-2023 |
| | | EP | 4216728 A1 | 02-08-2023 |
| | | US | 2023371538 A1 | 23-11-2023 |
| | | WO | 2022063901 A1 | 31-03-2022 |
| WO 2022117918 A1 | 09-06-2022 | AU | 2021390699 A1 | 06-07-2023 |
| | | CA | 3201424 A1 | 09-06-2022 |
| | | CN | 116568149 A | 08-08-2023 |
| | | EP | 4255199 A1 | 11-10-2023 |
| | | FI | 20206231 A1 | 02-06-2022 |
| | | JP | 2024501143 A | 11-01-2024 |
| | | US | 2024381896 A1 | 21-11-2024 |
| | | WO | 2022117918 A1 | 09-06-2022 |

EPO FORM P0459

For more details about this annex : see Official Journal of the European Patent Office, No. 12/82

**REFERENCES CITED IN THE DESCRIPTION**

**Patent documents cited in the description**

- WO 2022063901 A1
- WO 2023073238 A1
- WO 2022117918 A
- US 20220304331 A1